# EUROPÄISCHE PATENTSCHRIFT

(11) **EP 0 631 802 B1**
(45) Veröffentlichungstag und Bekanntmachung des Hinweises auf die Patenterteilung: **17.01.1996**
(21) Anmeldenummer: 94108198.6
(22) Anmeldetag: 27.05.1994
(51) Int. Cl.: B01D 29/23, B01D 29/66, B01D 29/70

(54) **Abwasser-Recycling-Anlage**
Waste water recycling device
Dispositif de recyclage des eaux usées

(30) Priorität: 27.05.1993 DE 4317777
(43) Veröffentlichungstag der Anmeldung: 04.01.1995
(73) Patentinhaber: Klass, Alfred, D-82299 Türkenfeld (DE); Rehm, Albert, D-82299 Türkenfeld (DE)
(72) Erfinder: Klass, Alfred, D-82299 Türkenfeld (DE); Rehm, Albert, D-82299 Türkenfeld (DE)
(74) Vertreter: Böck, Bernhard

(56) Entgegenhaltungen:
- EP-A- 0 476 546
- US-A- 3 254 772

## Beschreibung

Die Erfindung betrifft eine Abwasser-Recycling-Anlage mit einer Filtervorrichtung zur Reinigung des zugeführten Schmutzwassers, einem Sammelbehälter für das nach Durchlauf der Filtervorrichtung gereinigte Schmutzwasser und einer Pumpe zur Abgabe des gereinigten Schmutzwassers aus dem Behälter an mindestens einen Verbraucher nach dem Oberbegriff des Patentanspruchs 1.

Weiter betrifft die Erfindung ein Verfahren zur Reinigung einer Filtervorrichtung einer Abwasser-Recycling-Anlage.

Nach dem Stand der Technik wird üblicherweise für den Betrieb der WC-Spülung Frischwasser, d.h. Trinkwasser, verwendet. Im Hinblick auf die schonende Verwendung der natürlichen Ressourcen stellt eine derartige Verwendung von Trinkwasser eine kaum zu vertretende Vergeudung dar.

Es ist weiter bekannt, um den Frischwasserverbrauch zu minimieren, Grauwasser, d.h. im wesentlichen im privaten Bereich Abwasser von Dusche und Badewanne, zur Betätigung einer WC-Spülung zu verwenden. Nachteilig bei einer derartigen Verwendung von Grauwasser ist jedoch vor allem, daß im Dusch- bzw. Badewasser vorhandene Schmutzpartikel, insbesondere organische Schmutzpartikel, wie Haare oder dergleichen, durch ihre schnelle Zersetzung zum einen zu einer starken Geruchsbelästigung führen, da das Grauwasser in einem Sammelbehälter zwischengespeichert werden muß. Zum anderen führt eine Anhäufung derartiger Schmutzpartikel bereits nach kurzer Zeit zu einer Verstopfung und damit Funktionsunfähigkeit der Anlage, insbesondere der Pumpe zur Abgabe des Grauwassers aus dem Sammelbehälter.

Zur Vermeidung dieser Nachteile ist es bekannt, die Schmutzpartikel des Grauwassers vor der Einleitung in den Sammelbehälter in einer Filtervorrichtung herauszufiltern. Dies führt zwar prinzipiell zu einer wesentlich geringeren Verschmutzung des Sammelbehälters und damit zu einer erhöhten Störunanfälligkeit insbesondere des Pumpensystems, doch sind diese Filtervorrichtungen bereits nach kurzer Zeit durch die Schmutzpartikel verstopft und müssen in kurzen Wartungsabständen zeitaufwendig gereinigt werden.

Ausgehend von diesem Stand der Technik ist es die Aufgabe der vorliegenden Erfindung, eine Abwasser-Recycling-Anlage der im Oberbegriff des Patentanspruchs 1 genannten Art zu schaffen, die eine erhöhte Funktionssicherheit und insbesondere eine geringere Neigung zur Verschmutzung aufweist, wobei gleichzeitig die Wartungsintervalle auf das absolut notwendige Minimum reduziert werden sollen.

Diese Aufgabe wird durch eine Abwasser-Recycling-Anlage nach der Lehre des Patentanspruchs 1 gelöst.

Weiter liefert die vorliegende Erfindung zur Lösung der Aufgabe ein Verfahren zur Reinigung einer Filtervorrichtung einer Abwasser-Recycling-Anlage nach der Lehre des Patentanspruchs 18.

Vorteilhafte Ausgestaltungen der Erfindung sind Gegenstand der Unteransprüche.

Der Erfindung liegt zunächst einmal die Idee zugrunde, daß die Störanfälligkeit und insbesondere die Wartungshäufigkeit einer erfindungsgemäßen Abwasser-Recycling-Anlage dadurch entscheidend vermindert werden kann, daß die Filtervorrichtung in mehr oder weniger regelmäßigen Abständen entgegen der Filtrierrichtung rückgespült wird. Dabei wird zur Rückspülung bereits gereinigtes Schmutzwasser aus dem Sammelbehälter verwendet.

Das bei der Rückspülung des Filters verunreinigte Abwasser, das die im Filter zurückgehaltenen Schmutzpartikel aufweist, wird über einen Ablauf in ein Abflußsystem, beispielsweise in die Kanalisation, abgeleitet. Zur Durchführung eines derartigen Rückspülvorgangs ist die Filtervorrichtung gemäß der Erfindung aus einer ersten Stellung, in der das Schmutzwasser beim Durchlauf durch einen Filter gereinigt und in den Sammelbehälter abgegeben wird, in eine zweite Stellung reversibel verschwenkbar, in der nun wie vorbeschrieben rückgespült wird. Reversibel in diesem Zusammenhang bedeutet, daß nach dem Rückspülvorgang die Filtervorrichtung wieder in die erste Stellung, d.h. im wesentlichen die Betriebsstellung, zurückgeschwenkt wird.

Vorzugsweise erfolgt der Rückspülvorgang automatisch und zeitgesteuert in den Zeiten, in denen kein Anfall von Abwasser von Dusche und Badewanne zu erwarten ist. Dies wird in der Regel während der Nacht geschehen. Da jedoch der Rückspülvorgang lediglich einige Sekunden dauert, würde eine Betätigung der Rückspülung während einer anderen Zeit nicht zu einer wesentlichen Einschränkung der Funktionsfähigkeit der Abwasser-Recycling-Anlage für die Grauwasserverwendung im Haushalt führen.

Nach einem bevorzugten Ausführungsbeispiel der Erfindung weist die Filtervorrichtung ein rohrförmiges beidseitig offenes Gehäuse auf, in dem mindestens ein Filter angeordnet ist. Vorzugsweise ist der Filter auswechselbar, wobei jedoch durch die Erfindung, wie vorstehend beschrieben, die Wechselintervalle entscheidend verlängert werden können. Das Verschwenken der Filtervorrichtung erfolgt bei diesem Ausführungsbeispiel um eine Schwenkachse, die im wesentlichen senkrecht zur Längsachse des rohrförmigen Gehäuses verläuft.

Nach einem weiteren Ausführungsbeispiel der Erfindung ist das Gehäuse der Filtervorrichtung becherförmig ausgebildet, wobei der Boden des Bechergehäuses mindestens eine Öffnung aufweist, die sowohl als Auslauf für das gefilterte Schmutzwasser als auch als Einlauf für das zum Rückspülvorgang notwendige gereinigte Wasser dient.

Der Filter selbst kann in grundsätzlich beliebiger Weise ausgebildet sein, solange die gewünschte erfindungsgemäße Reinigungswirkung erreicht wird. Beispielsweise kann der Filter in einfachster Weise als Flachfilter ausgebildet sein. Insbesondere beim Ausführungsbeispiel mit becherförmigem Gehäuse ist der Filter jedoch vorzugsweise als geschlossener Filterkorb ausgebildet, dessen Aussenkontur vorzugsweise im wesentlichen formkomplementär zur Innenkontur des Gehäuses ist. Die Öffnung im Gehäuseboden mündet dabei unmittelbar in den Innenraum des Filters. Das zu filternde Schmutzwasser dringt also von aussen durch die Umfangsflächen des Filterkorbes in diesen ein, wird dabei gereinigt und anschließend durch die Bodenöffnung abgeleitet.

Die Rückspülung der Filtervorrichtung, verbunden mit dem Verschwenken der Filtervorrichtung von der ersten in die zweite Stellung und zurück, kann grundsätzlich ohne den Boden der Erfindung zu verlassen durch eine Bedienperson durchgeführt werden. Vorzugsweise jedoch weist die Filtervorrichtung eine Betätigungsvorrichtung auf, wobei diese Betätigungsvorrichtung insbesondere durch einen hydraulisch oder pneumatisch betätigbaren Stellzylinder gebildet wird, der zur Durchführung der Schwenkbewegung der Filtervorrichtung von der ersten in die zweite Stellung dient. Der Stellzylinder kann dabei in grundsätzlich beliebiger Weise öl-hydraulisch, pneumatisch oder über einen Elektromotor betätigt werden; in einfachster Weise erfolgt jedoch die Betätigung vorzugsweise wasser-hydraulisch unter Verwendung des gereinigten Schmutzwassers aus dem Sammelbehälter.

Die Filtervorrichtung kann grundsätzlich so gelagert sein, daß eine Betätigung, d.h. ein Verschwenken, durch einen zweiseitig wirkenden Stellzylinder erfolgt, der sowohl die Schwenkbewegung von der ersten in die zweite Stellung als auch die Rückschwenkbewegung von der zweiten in die erste Stellung bewirkt. Nach einem bevorzugten Ausführungsbeispiel der Erfindung jedoch ist die Schwenkachse der Filtervorrichtung, bezogen auf die Längsachse des rohrförmigen Gehäuses, axial außermittig so angeordnet, daß aufgrund der Schwerkraft die Filtervorrichtung selbsttätig nach dem Rückspülvorgang in die erste Stellung, d.h. Normalbetriebsstellung, zurückschwenkt. Dies bedeutet mit anderen Worten, daß die Betätigungsvorrichtung ausschließlich zum Verschwenken der Filtervorrichtung von der ersten in die zweite Stellung dient, während das Rückschwenken schwerkraftbeaufschlagt selbsttätig erfolgt. Bei diesem Ausführungsbeispiel reicht es aus, den Stellzylinder als einseitig wirkenden Zylinder auszuführen, wobei der Angriffspunkt der Stellstange des Stellzylinders, bezogen auf die erste Stellung der Filtervorrichtung und die Kraftrichtung der Schwerkraft, unterhalb der Schwenkachse der Filtervorrichtung liegt.

Die erste und die zweite Stellung der Filtervorrichtung gemäß der Erfindung stellen jeweils eine genau definierte Endposition dar. Dabei kann diese Endposition durchaus durch die Betätigungsvorrichtung bestimmt werden. Vorzugsweise jedoch wird die jeweilige Endposition der Filtervorrichtung in der ersten und zweiten Stellung durch einen Anschlag bestimmt, wobei für jede Position ein getrennter Anschlag oder aber ein gemeinsamer Anschlag für beide Positionen Verwendung finden kann.

Nach einem weiteren Ausführungsbeispiel der Erfindung ist an der Öffnung im Boden des becherförmigen Gehäuses der erfindungsgemäßen Filtervorrichtung ein sich nach aussen erstrekkender Rohrstutzen angeordnet. Dieser Rohrstutzen, der grundsätzlich sowohl als Auslauf als auch als Einlauf für das Wasser zum Rückspülen dient, ist dabei so ausgebildet, daß er beim Verschwenken der Filtervorrichtung in die zweite Stellung an die druckbeaufschlagbare Rückspülleitung dichtend, insbesondere druck- und fluiddicht, zur Anlage gebracht werden kann. Dabei kann diese dichtende Anlage gleichzeitig als Anschlag für die zweite Stellung dienen.

Nach einem besonders bevorzugten Ausführungsbeispiel der Erfindung weist die Anlage einen Endschalter auf, der durch die Filtervorrichtung beim Verschwenken in die zweite Stellung betätigbar ist und, beispielsweise über eine geeignete Steuervorrichtung, den Beginn des Rückspülvorganges auslöst. Dadurch ist gewährleistet, daß der unter relativ hohem Druck stattfindende Rückspülvorgang erst beginnt, wenn die Filtervorrichtung in der dafür geeigneten Position ist, d.h. insbesondere mit dem Ablauf in ein Abflußsystem verbunden ist. So wird zuverlässig vermieden, daß eine erneute Verunreinigung des bereits gereinigten Wassers im Sammelbehälter erfolgt.

Die Filtervorrichtung gemäß der Erfindung filtert im wesentlichen mechanisch die Schmutzteilchen aus, wobei die Größe der im gereinigten Schmutzwasser verbleibenden Schmutzteilchen im wesentlichen von der Porengröße des Filters abhängt. Ein typischer Filter zur Verwendung in der vorliegenden Erfindung weist beispielsweise eine Porengröße von 0,02 mm auf. Die seifigen Bestandteile des Grauwassers werden normalerweise nicht herausgefiltert, da dies zum einen eine weitaus umfangreichere Filtervorrichtung erfordern würde und zum anderen die seifigen Bestandteile aufgrund ihrer Reinigungswirkung im WC-Spülkreislauf durchaus von Vorteil sind. Jedoch können diese seifigen Bestandteile zu einer Belagbildung auf den Innenwänden des Sammelbehälters führen, wobei sich dann in diesem Belag kleinste, nicht herausgefilterte Schmutzpartikel festsetzen können. Um eine derartige Verschmutzung der Innenwände des Sammelbehälters zuverlässig zu vermeiden bzw. zu beseitigen, weist gemäß einem besonders bevorzugten Ausführungsbeispiel der Erfindung die Anlage eine Vorrichtung zur Reinigung des Sammelbehälters auf, die oberhalb des Wasserspiegels im Sammelbehälter angeordnet ist. Diese Reinigungsvorrichtung weist dabei mindestens eine rotierende Düse mit geringem Querschnitt auf, die gereinigtes Schmutzwasser aus dem Sammelbehälter unter Druck gegen die Innenwand des Sammelbehälters spritzt. Dadurch werden eventuell angesetzte Beläge an der freien Innenwand, d.h. der Innenwand über dem Wasserspiegel, des Sammelbehälters zuverlässig vermieden bzw. beseitigt. Ein weiterer Vorteil einer derartigen Vorrichtung mit rotierender Düse ist, daß gleichzeitig das gereinigte Schmutzwasser im Sammelbehälter umgewälzt und dadurch mit Luftsauerstoff angereichert wird. Dies führt zu einer deutlichen Verminderung der Geruchsbildung und Geruchsbelästigung. Vorteilhafterweise erfolgt diese Spülung des Behälters bzw. Belüftung des Wassers im Sammelbehälter in Verbindung mit der Rückspülung während den Zeiten, in denen weder Grauwasser anfällt, noch WC-Spülwasser benötigt wird. Zeit und Dauer der Reinigung bzw. Belüftung des Wassers können dabei beliebig eingestellt werden.

Die Druckversorgung der erfindungsgemäßen Anlage sowohl zur Abgabe des gereinigten Schmutzwassers an den Verbraucher, d.h. im wesentlichen die WC-Spülung, als auch zur Rückspülung des Filters, erfolgt über eine für sich bekannte Pumpe. Dabei kann für jeden der beiden Pumpvorgänge eine getrennte Pumpe verwendet werden; vorzugsweise jedoch wird eine gemeinsame Pumpe für beide Pumpvorgänge verwendet, die den gesamten benötigten Druckbereich abdeckt. Diese gemeinsame Pumpe weist dabei vorzugsweise ein Druckspeichergefäß auf, um insbesondere die bei der Rückspülung benötigte Wassermenge während der Spülzeit, typischerweise im Bereich einiger Sekunden, mit dem notwendigen Druck zur Verfügung zu stellen. Dabei liegt der Druck zur Abgabe des gereinigten Schmutzwassers an den Verbraucher vorzugsweise im Bereich zwischen 1 und 4 bar; der Druck für die Rückspülung liegt vorzugsweise im gleichen Bereich, doch erfolgt die Rückspülung mit erhöhtem Volumenstrom.

Die gesamte Anlage gemäß der vorliegenden Erfindung weist vorzugsweise eine Steuervorrichtung auf, mittels der die Steuerung der Pumpe, der Betätigungsvorrichtung für die Filtervorrichtung und/oder Reinigungs- oder Belüftungsvorrichtung über Magnetventile bedarfs- und/oder zeitgesteuert erfolgt. Bei einer zeitgesteuerten Betätigung wird, wie vorstehend bereits beschrieben, der Reinigungs- bzw. Belüftungsvorgang und/oder der Rückspülvorgang zu festen oder variablen Zeiten durchgeführt, wobei diese Betriebsvorgänge nach Möglichkeit immer in Zeiten gelegt werden, in denen kein Grauwasser anfällt bzw. kein WC-Spülwasser benötigt wird.

Eine bedarfsgesteuerte Betätigung des Rückspülvorganges ist beispielsweise durch einen Drucksensor im Gehäuse der Filtervorrichtung möglich, der bei Überschreiten eines bestimmten Verschmutzungsgrades des Filters und damit verbunden einem Anstieg des Druckes in der Zuleitung bei einem Anfall von Grauwasser den Rückspülvorgang auslöst.

Nach einem weiteren bevorzugten Ausführungsbeispiel der Erfindung kann das Verschwenken der Filtervorrichtung in die zweite Stellung und die Auslösung des Rückspülvorgangs dadurch erfolgen, daß im Kragenbereich des becherförmigen Gehäuses bzw. im Bereich des Einlaufendes für das Schmutzwasser des rohrförmigen Gehäuses ein Schalter, insbesondere ein durch einen Schwimmer betätigbarer Schalter, angeordnet ist, der, wenn der Schmutzwasserpegel im Filtergehäuse beispielsweise durch zunehmende Verschmutzung des Filters steigt und den Betätigungsbereich des Schalters erreicht, ein entsprechendes elektrisches oder mechanisches Signal an die Steuer- bzw. Betätigungsvorrichtung abgibt.

Weiter kann der Kragenbereich des Gehäuses mit einem Überlauf versehen sein, der, wenn beispielsweise eine Störung der Anlage vorliegt und kein Rückspülen mehr möglich ist, das sich im Filtergehäuse stauende nicht mehr durch den Filter abführbare Schmutzwasser unmittelbar oder mittelbar, beispielsweise über eine Schlauchverbindung, in das Abflußsystem ableitet.

Eine weitere Verbesserung der Qualität des durch die Filtervorrichtung der Erfindung gereinigten Schmutzwassers kann in an sich bekannter Weise dadurch erzielt werden, daß insbesondere zwischen dem Vorratsbehälter und der zum jeweiligen Verbraucher, beispielsweise einer WC-Spülung, führenden Leitung, eine Vorrichtung zur Behandlung des gereinigten Schmutzwassers mit UV-Licht angeordnet ist. Dadurch kann in bakteriologischer Hinsicht unbedenkliches Brauchwasser in Badeseequalität erreicht werden.

Das Verfahren gemäß der Erfindung zur Reinigung einer Filtervorrichtung einer Abwasser-Recycling-Anlage mit einer Filtervorrichtung zur Reinigung des zugeführten Schmutzwassers, einem Sammelbehälter für das nach Durchlauf der Filtervorrichtung gereinigte Schmutzwasser und einer Pumpe zur Abgabe des gereinigten Schmutzwassers aus dem Behälter an mindestens einen Verbraucher weist folgende zeitliche nacheinander angeordnete Verfahrensschritte auf: Zunächst einmal wird die Filtervorrichtung aus einer Stellung, in der das Schmutzwasser beim Durchlauf durch den Filter gereinigt und in den Sammelbehälter abgegeben wird, in eine zweite Stellung verschwenkt. Anschließend wird in dieser zweiten Stellung der Filter entgegen der Filtrierrichtung mit gereinigtem Schmutzwasser aus dem Sammelbehälter rückgespült; gleichzeitig wird das durch die Rückspülung des Filters verunreinigte Abwasser über einen Ablauf in ein Abflußsystem gegeben. Schließlich erfolgt nach Beendigung des Rückspülvorganges ein Rückschwenken der Filtervorrichtung in die erste Stellung, die der Normalbetriebsstellung entspricht.

Die Anlage gemäß der Erfindung kann in vielen Bereichen der Abwasser-Wiederaufbereitung Verwendung finden. Vorteilhafterweise wird jedoch die erfindungsgemäße Anlage zur Reinigung von insbesondere beim Baden und Duschen anfallendem Grauwasser zur Wiederverwendung als Brauchwasser in einer WC-Spülung verwendet.

Im folgenden ist die Erfindung anhand von lediglich Ausführungsbeispiele zeigenden Zeichnungen näher erläutert. Es zeigt
- Fig. 1: in schematischer blockdiagrammartiger Darstellung ein erstes Ausführungsbeispiel einer Abwasser-Recycling-Anlage gemäß der Erfindung und
- Fig. 2: ein zweites Ausführungsbeispiel einer Filtervorrichtung in schematischer vergrösserter Darstellung.

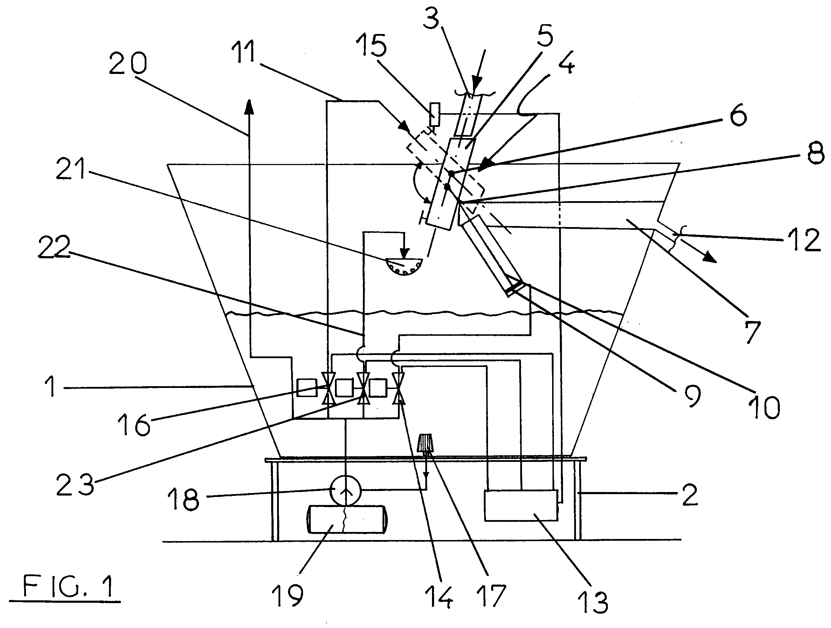

Das in Fig. 1 dargestellte Ausführungsbeispiel einer Anlage gemäß der Erfindung weist einen Sammelbehälter 1 in Form eines nach oben offenen Troges auf. Der Sammelbehälter 1 steht dabei auf einem Grundgestell 2. Über eine lediglich schematisch dargestellte Rohrleitung 3 wird vom Ablauf einer Dusche bzw. einer Badewanne verunreinigtes Grauwasser in Pfeilrichtung über eine Filtervorrichtung 4 in den Sammelbehälter 1 eingeleitet.

Die Filtervorrichtung 4 weist ein rohrförmiges beidseitig offenes Gehäuse 5 auf, in dem ein nicht dargestellter Filter angeordnet ist. In diesem Filter wird das eingeleitete Grauwasser von Schmutzpartikeln befreit. Die Filtervorrichtung 4 bzw. das rohrförmige Gehäuse 5 der Filtervorrichtung 4 ist um eine Schwenkachse 6 verschwenkbar im Sammelbehälter angeordnet und gelagert. Dabei ist die Schwenkachse 6, bezogen auf die Längsachse des rohrförmigen Gehäuses 5, axial außermittig so angeordnet, daß in der Darstellung nach der Figur die Schwenkachse sich oberhalb dem geometrischen Längsachsenmittelpunkt befindet. Aufgrund dieser Anordnung, verbunden mit der gegenüber der Vertikalachse geneigten Schrägstellung des rohrförmigen Gehäuses 5, erfolgt aufgrund der wirkenden Schwerkraft eine stabile Anlage des Gehäuses 5 an der vorderen Kante 8 des Ablaufs 7. Die dargestellte Position entspricht in der Terminologie der vorliegenden Erfindung der ersten Stellung.

Im Sammelbehälter 1 ist weiter im wesentlichen ortsfest eine Betätigungsvorrichtung 9 in Form eines einseitig wirkenden hydraulischen Stellzylinders angeordnet. Die Stellstange 10 des Zylinders greift dabei am Gehäuse 5 der Filtervorrichtung 4 an einem Punkt an, der, bezogen auf die erste Stellung der Filtervorrichtung 4 und die Kraftrichtung der Schwerkraft, unterhalb der Schwenkachse 6 liegt.

Wird die Betätigungsvorrichtung 9 in Form des Stellzylinders nun mit Druck beaufschlagt, wird die Stellstange 10 nach oben bewegt, wodurch die Filtervorrichtung 4 um die Schwenkachse 6 in die durch strichlierte Linien dargestellte zweite Stellung verschwenkt wird. Diese zweite Stellung wird dabei durch den Anschlag des Gehäuses 5 wiederum an der vorderen Kante 8 des Ablaufs 7 definiert, wobei jedoch in der zweiten Stellung der axial dem ersten Anschlagbereich gegenüberliegende zweite Anschlagbereich an der vorderen Kante 8 zur Anlage kommt. Ein besonderer Vorteil dieses Anschlages in der zweiten Stellung besteht darin, daß bereits bei einem "harten" Anschlag des Gehäuses 5 der Filtervorrichtung 4 die im Filter befindlichen Schmutzpartikel gelöst und herausgeklopft werden.

In der strichlierten zweiten Stellung der Filtervorrichtung 4 wird über die lediglich schematisch dargestellte Zuleitung 11 unter vollem Betriebsdruck stehendes aus dem Sammelbehälter 1 entnommenes gereinigtes Wasser entgegen der Filtrierrichtung durch die Filtervorrichtung 4 zur Reinigung des Filters gespült, wobei die verunreinigten Abwässer über den Ablauf 7 und den Abflußanschluß 12 in eine nicht dargestellte Kanalisation abgeführt werden.

Nach Beendigung des Rückspülvorganges erfolgt nach Wegfall des Drucks in der Betätigungsvorrichtung 9 in Form des Stellzylinders ein schwerkraftbeaufschlagtes selbsttätiges Rückschwenken aus der zweiten in die erste Stellung. Damit ist die Anlage wieder betriebsbereit.

Die Steuerung des gesamten Rückspülvorganges erfolgt bei diesem Ausführungsbeispiel über die Steuervorrichtung 13 zeitgesteuert. Dabei wird bei Erreichen einer bestimmten Tages-bzw. Nachtzeit zunächst einmal über das Magnetventil 14 die Betätigungsvorrichtung 9 in Betrieb gesetzt, wodurch die Filtervorrichtung 4 in die zweite (strichlierte) Stellung verschwenkt wird. Das Erreichen dieser zweiten Stellung wird über einen Endschalter 15 an die Steuervorrichtung 13 zurückgemeldet, worauf über das Magnetventil 16 die Filtervorrichtung 4 über die Pumpe 18 und die Zuführung 11 mit druckbeaufschlagter Spülflüssigkeit versorgt wird. Die Spülflüssigkeitentnahme erfolgt dabei über den Filter 17 unmittelbar aus dem Sammelbehälter 1.

Beim Ausführungsbeispiel nach Figur 1 ist nur eine einzige Pumpe 18 mit einem Druckspeichergefäß 19 vorgesehen. Dabei dient die Pumpe 18 sowohl zur Abgabe des gereinigten Schmutzwassers aus dem Sammelbehälter 1 über die Leitung 20 an einen nicht dargestellten Verbraucher, beispielsweise eine WC-Spülung, als auch zur Abgabe des für den Spülvorgang über die Leitung 11 zugeführten notwendigen mit höherem Druck beaufschlagten Rückspülwassers.

Weiter weist das Ausführungsbeispiel der Fig. 1 eine Vorrichtung zur Reinigung des Sammelbehälters 1 auf. Diese Vorrichtung besteht im wesentlichen aus einer rotierenden Düse 21 mit Düsenöffnungen geringen Querschnitts, die über die Leitung 22 mit druckbeaufschlagtem gereinigtem Schmutzwasser aus dem Sammelbehälter 1 versorgt wird. Dabei spritzt die rotierende Düse 21 das zugeführte Wasser sowohl gegen die oberhalb des Wasserspiegels freiliegenden Innenwände des Sammelbehälters 1, um diese zu reinigen, als auch gegen den Wasserspiegel, um das im Sammelbehälter 1 befindliche Wasser mit Luftsauerstoff anzureichern. Die Ansteuerung der Leitung 22 und damit der Düse 21 erfolgt dabei über die Steuervorrichtung 13 und das Magnetventil 23.

Um bei einer Entleerung des Sammelbehälters 1, wenn beispielsweise mehr Grauwasser zur WC-Spülung entnommen wird, als durch Dusch- und Badeabwässer anfällt, der Wasserspiegel im Sammelbehälter 1 unter einen bestimmten Wert sinkt und damit die Funktionssicherheit der WC-Spülung nicht mehr gewährleistet ist, kann gemäß einem Ausführungsbeispiel der Erfindung vorgesehen sein, mittels eines Nachlaufrelais und/oder Magnetventils eine wasserstandsgeregelte Auffüllung mit Frisch- bzw. Trinkwasser durchzuführen.

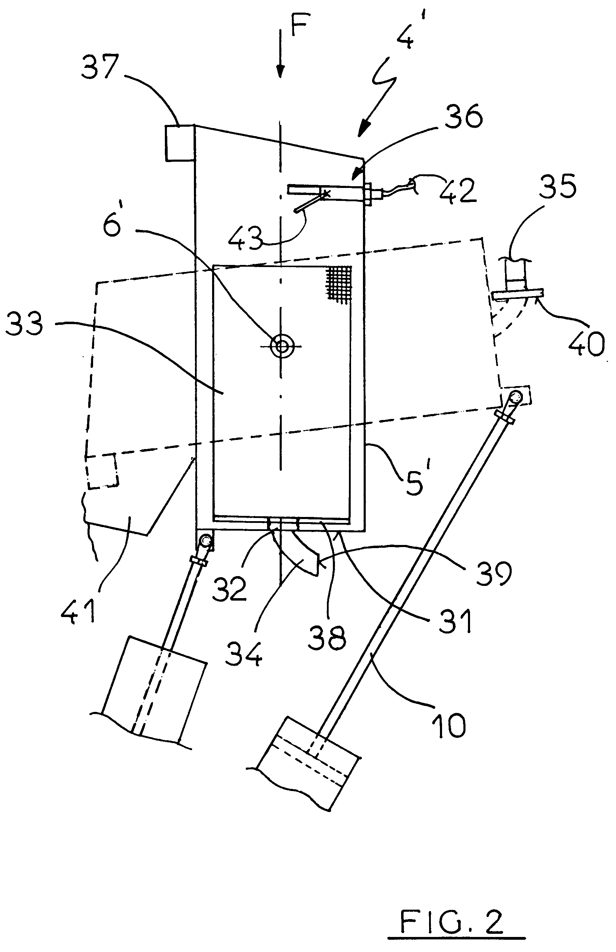

In Fig. 2 ist in vergrößerter Darstellung ein zweites Ausführungsbeispiel einer Filtervorrichtung gemäß der Erfindung lediglich schematisch gezeigt. Diese Filtervorrichtung 4' weist ein becherförmiges Gehäuse 5' auf, das nach oben, d.h. kragenseitig offen ist und nach unten durch einen Boden 31 im wesentlichen verschlossen ist. Im Boden 31 des becherförmigen Gehäuses 5' ist eine Öffnung 32 angeordnet, die zum einen zum Ablauf des gefilterten Schmutzwassers und zum anderen zum Einlauf des Rückspülwassers dient. Im Bereich dieser Öffnung 32 des Becherbodens 31 ist ein gekrümmter rohrförmiger Ablaufstutzen 34 angeordnet.

Im Inneren des becherförmigen Gehäuses 5' ist weiter ein Filter 33 angeordnet, der als im wesentlichen allseitig geschlossener Filterkorb ausgebildet ist. Lediglich im Bereich des Bodens 38 des Filters 33 weist dieser eine Öffnung auf, die mit der Öffnung 32 im Gehäuseboden 31 im wesentlichen fluchtet und insbesondere in fluiddurchlässiger Verbindung steht. Beim hier gezeigten Ausführungsbeispiel ist die Öffnung des Filterbodens 38 mit der Öffnung des Becherbodens 31 mittels einer Verlängerung des Rohrstutzens 34 nach Art einer Schraubverbindung verbunden.

Sowohl das becherförmige Gehäuse 5' als auch der Filter 33 weisen eine im wesentlichen zylindrische Gestalt auf, wobei der Außendurchmesser des Filters 33 kleiner als der Innendurchmesser des Gehäuses 5' so gewählt ist, daß beim Einströmen des zu reinigenden Schmutzwassers in Richtung des Pfeiles F in das Gehäuse 5' der Filter 33 im wesentlichen allseitig vom zu reinigenden Wasser umspült wird.

Entsprechend zum in Fig. 1 dargestellten Ausführungsbeispiel ist die Filtervorrichtung 4' gemäß der Darstellung in Fig. 2 um eine Achse 6' schwenkbar gelagert. In der Darstellung nach Fig. 2 entspricht die mit durchgehenden Linien dargestellte Position der ersten Stellung und die mit strichlierten Linien dargestellte Position der zweiten, d.h. der Rückspülstellung. Das Verschwenken der Filtervorrichtung 4' erfolgt in analoger Weise zum Ausführungsbeispiel nach Fig. 1 durch einen hydraulischen oder pneumatischen Stellzylinder, dessen Stellstange 10 im Bereich des Bodens des becherförmigen Gehäuses 5' angelenkt ist.

Zum Rückspülen des Filters 33, das bedarfs- oder zeitgesteuert ausgelöst werden kann, erfolgt ein Verschwenken des Gehäuses 5' der Filtervorrichtung 4' aus der ersten durchgezogenen in die zweite strichlierte Stellung. Dabei wird der Rohrstutzen 34 mit seinem axial äußeren Ende 39 durch die Stellstange 10 des Stellzylinders an den Anschlag 40 einer Rückspülleitung 35 gedrückt. Der Anschlag 40 ist dabei in nicht dargestellter Weise an der zum Rohrstutzen 34 weisenden Seite mit einer Dichtung, beispielsweise einer Gummidichtung versehen, so daß die Anlage des Rohrstutzens 34 am Anschlag fluid- und druckdicht erfolgt. Nach Herstellung dieser fluid- und druckdichten Verbindung kann dann in der beim Ausführungsbeispiel nach Fig. 1 vorbeschriebenen Weise der Rückspülvorgang erfolgen, wobei das Rückspülwasser durch den Rohrstutzen und die Öffnung 32 durch den Boden 38 des Filters 33 unter Druck in den Innenraum des Filters 33 geführt wird, wodurch Schmutzpartikel, die sich an den Filterflächen des Filters 33 angesetzt haben, abgespült und durch das obere offene Ende des becherförmigen Gehäuses 5' in ein lediglich schematisch dargestelltes Abflußsystem (Auffangbehälter 41) abgeleitet werden. Nach Beendigung des Rückspülvorgangs erfolgt eine Verschwenkung der Filtervorrichtung 4' in die durchgezogene erste Stellung, worauf die Anlage wieder betriebsbereit ist.

Bei dem in Fig. 2 dargestellten Ausführungsbeispiel wird die Auslösung des Verschwenkens in die zweite Stellung und damit des Rückspülvorgangs mittels eines Schalters 36 bewirkt, der im Bereich des kragenseitigen Endes des becherförmigen Gehäuses 5' angeordnet ist. Der Schalter, der über eine Anschlußleitung 42 mit einer nicht dargestellten Steuereinrichtung verbunden ist, ist dabei als Schwimmerschalter mit einem Schwimmer 43 ausgebildet. Wenn der Flüssigkeitspegel des zu reinigenden Schmutzwassers aufgrund der Verschmutzung des Filters 33 und, damit verbunden, des gestörten Druchflusses durch den Filter 33 im Gehäuse 5' ansteigt, wird bei Erreichen eines durch die Höhe der Anordnung des Schalters 36 vorbestimmten Pegels der Schwimmer 43 betätigt und ein entsprechender Schaltimpuls zur Steuerung des Beginns des Rückspülvorganges ausgelöst. Dabei kann dieser Schalter 36 alleine die Auslösung des Rückspülvorganges bewirken. Jedoch kann ein derartiger Schalter 36 auch zusätzlich zu einer beispielsweise zeitgesteuerten Auslösung des Rückspülvorganges als Sicherheitseinrichtung vorgesehen sein.

Um bei einer Störung der Anlage, beispielsweise durch Stromausfall oder dergleichen, ein Einströmen ungereinigten Schmutzwassers in den in Fig. 2 nicht dargestellten Sammelbehälter zu vermeiden, ist bei dem in Fig. 2 dargestellten Ausführungsbeispiel das Gehäuse 5' kragenseitig mit einem Überlauf 37 versehen. Dieser Überlauf 37 ist im einfachsten Falle als offener Ausguß ausgebildet. Steigt nun das Schmutzwasser im Gehäuse 5' der Filtervorrichtung 4' an und erfolgt aufgrund einer Störung beispielsweise des Schalters 36 keine Auslösung des Rückspülvorgangs verbunden mit einem Verschwenken der Filtervorrichtung in die strichlierte Stellung, strömt das ungereinigte Schmutzwasser über den Überlauf 37 unmittelbar bzw. mittelbar über den Auffangbehälter 41 in das nicht dargestellte Abflußsystem. Damit wird eine Verunreinigung des Sammelbehälters zuverlässig vermieden.

## Patentansprüche

1. Abwasser-Recycling-Anlage mit einer Filtervorrichtung (4) zur Reinigung des zugeführten Schmutzwassers, einem Sammelbehälter (1) für das nach Durchlauf der Filtervorrichtung gereinigte Schmutzwasser und einer Pumpe (18) zur Abgabe des gereinigten Schmutzwassers aus dem Behälter an mindestens einen Verbraucher,
dadurch **gekennzeichnet**,
daß die Filtervorrichtung (4) aus einer ersten Stellung, in der das Schmutzwasser beim Durchlauf durch einen Filter gereinigt und in den Sammelbehälter (1) abgegeben wird, in eine zweite Stellung reversibel verschwenkbar ist, in der der Filter mit gereinigtem Schmutzwasser aus dem Sammelbehälter (1) rückspülbar ist, wobei das durch Rückspülung des Filters verunreinigte Abwasser über einen Ablauf (7,12) in ein Abflußsystem ableitbar ist.

2. Anlage nach Anspruch 1,
dadurch **gekennzeichnet,**
daß die Filtervorrichtung (4) ein rohrförmiges, beidseitig offenes Gehäuse (5) aufweist, in dem mindestens ein insbesondere auswechselbarer Filter angeordnet ist, wobei die Verschwenkung der Filtervorrichtung (4) um eine Schwenkachse (6), die im wesentlichen senkrecht zur Längsachse des rohrförmigen Gehäuses (5) verläuft, erfolgt.

3. Anlage nach Anspruch 1,
dadurch **gekennzeichnet,**
daß die Filtervorrichtung (4') ein becherförmiges Gehäuse (5') aufweist, dessen Boden (31) mit einer Öffnung (32) versehen ist und in dem mindestens ein vorzugsweise auswechselbarer Filter (33) angeordnet ist, wobei die Verschwenkung der Filtervorrichtung (4') um eine Schwenkachse (6'), die im wesentlichen senkrecht zur Längsachse des becherförmigen Gehäuses (5') verläuft, erfolgt.

4. Anlage nach Anspruch 3,
dadurch **gekennzeichnet,**
daß der Filter (33) als im wesentlichen geschlossener Filterkorb ausgebildet ist, wobei die Öffnung (32) im Gehäuseboden (31) unmittelbar in den Filterinnenraum mündet.

5. Anlage nach Anspruch 3 oder 4,
**gekennzeichnet** durch
mindestens einen sich an die Öffnung (32) des Gehäusebodens (31) nach aussen anschließenden Rohrstutzen (34) als Auslauf aus dem Filtervorrichtung (4'), der beim Verschwenken der Filtervorrichtung (4') in die zweite Stellung an eine Rückspülleitung (35) im wesentlichen fluid- und druckdicht zur Anlage bringbar ist.

6. Anlage nach einem der Ansprüche 1 bis 5,
**gekennzeichnet** durch
eine Betätigungsvorrichtung (9), insbesondere in Form eines hydraulisch oder pneumatisch betätigbaren Stellzylinders, zur Durchführung der Schwenkbewegung der Filtervorrichtung (4,4') von der ersten in die zweite Stellung.

7. Anlage nach einem der Ansprüche 2 bis 6,
dadurch **gekennzeichnet**
daß die Schwenkachse (6,6'), bezogen auf die Längsachse des Gehäuses (5, 5'), axial aussermittig so angeordnet ist, daß aufgrund der Schwerkraft die Filtervorrichtung (4, 4') selbsttätig nach dem Rückspülvorgang in die erste Stellung zurückschwenkt.

8. Anlage nach Anspruch 7,
dadurch **gekennzeichnet,**
daß der Stellzylinder ein einseitig wirkender Zylinder ist und der Angriffspunkt der Stellstange (10) des Stellzylinders, bezogen auf die erste Stellung der Filtervorrichtung (4,4') und die Kraftrichtung der Schwerkraft, unterhalb der Schwenkachse (6,6') liegt.

9. Anlage nach einem der Ansprüche 1 bis 8,
**gekennzeichnet** durch
je einen oder einen gemeinsamen Anschlag (8) für die Filtervorrichtung (4,4') in der ersten und zweiten Stellung.

10. Anlage nach einem der Ansprüche 1 bis 9,
**gekennzeichnet** durch
einen Endschalter (15), der durch die Filtervorrichtung (4,4') beim Verschwenken in die zweite Stellung betätigbar ist und den Beginn des Rückspülvorgangs auslöst.

11. Anlage nach einem der Ansprüche 1 bis 10,
**gekennzeichnet** durch
einen Schalter (36), insbesondere Schwimmerschalter, im Kragenbereich des becherförmigen Gehäuses (5') bzw. im Bereich des Endes des rohrförmigen Gehäuses (5), durch das das Schmutzwasser eingeleitet wird, wobei der Schalter beim Anstieg des Schmutzwasserpegels im Gehäuse (5,5') ein Verschwenken der Filtervorrichtung (4,4')in die zweite Stellung auslöst.

12. Anlage nach einem der Ansprüche 1 bis 11,
**gekennzeichnet** durch
einen Überlauf (37) im Kragenbereich des becherförmigen Gehäuses (5') bzw. im Bereich des Endes des rohrförmigen Gehäuses (5), durch das das Schmutzwasser eingeleitet wird, der beim Anstieg des Schmutzwasserpegels im Gehäuse (5,5') überschüssiges Schmutzwasser mittelbar oder unmittelbar in das Abflußsystem ableitet.

13. Anlage nach einem der Ansprüche 1 bis 12,
**gekennzeichnet** durch
eine Vorrichtung zur Reinigung des Sammelbehälters (1) und/oder Belüftung des im Sammelbehälters (1) gehaltenen gereinigten Schmutzwassers, die oberhalb des Wasserspiegels im Sammelbehälter (1) angeordnet ist und mindestens eine rotierende Düse (21) geringen Querschnitts aufweist, die gereinigtes Schmutzwasser aus dem Sammelbehälter (1) unter Druck gegen die Innenwand des Sammelbehälters (1) und/oder den Wasserspiegel spritzt.

14. Anlage nach einem der Ansprüche 1 bis 13,
**gekennzeichnet** durch
eine Pumpe (18) mit Druckspeichergefäß (19), die sowohl den für die Abgabe des gereinigten Schmutzwassers an einen Verbraucher als auch den für die Rückspülung notwendigen Druck zur Verfügung stellt.

15. Anlage nach Anspruch 14,
dadurch **gekennzeichnet,**
daß der Druck zur Abgabe des gereinigten Schmutzwassers an einen Verbraucher und der Druck für die Rückspülung im Bereich zwischen 1 und 4 bar liegt.

16. Anlage nach einem der Ansprüche 1 bis 15,
**gekennzeichnet** durch
eine Steuervorrichtung (13), mittels der die Steuerung der Pumpe (18), der Betätigungsvorrichtung (9) für die Filtervorrichtung (4,4') und/oder Reinigungs- oder Belüftungsvorrichtung (21) über Magnetventile (14,16,23) bedarfs- und/oder zeitgesteuert erfolgt.

17. Anlage nach einem der Ansprüche 1 bis 16,
**gekennzeichnet** durch
eine Vorrichtung zur Behandlung des gereinigten Schmutzwassers mit UV-Licht zur bakteriologischen Verbesserung der Wasserqualität.

18. Verfahren zur Reinigung einer Filtervorrichtung einer Abwasser-Recycling-Anlage mit einer Filtervorrichtung zur Reinigung des zugeführten Schmutzwassers, einem Sammelbehälter für das nach Durchlauf der Filtervorrichtung gereinigte Schmutzwasser und einer Pumpe zur Abgabe des gereinigten Schmutzwassers aus dem Behälter an mindestens einen Verbraucher, mit
folgenden Verfahrensschritten:
- Schwenken der Filtervorrichtung (4,4') aus einer ersten Stellung, in der das Schmutzwasser beim Durchlauf durch den Filter gereinigt und in den Sammelbehälter (1) abgegeben wird, in eine zweite Stellung;
- Rückspülen des Filters entgegen der Filtrierrichtung mit gereinigtem Schmutzwasser aus dem Sammelbehälter (1);
- Ableitung des durch Rückspülung des Filters verunreinigten Abwassers in ein Abflußsystem (7,12); und
- Rückschwenken der Filtervorrichtung (4,4') in die erste Stellung.

19. Verwendung der Abwasser-Recycling-Anlage nach einem der Ansprüche 1 bis 17 zur Reinigung von insbesondere beim Baden und Duschen anfallendem Grauwasser zur Wiederverwendung als Brauchwasser einer WC-Spülung.

## Claims

1. Water-recycling system comprising a filter device (4) for cleaning the dirty water supplied, a collecting tank (1) for the dirty water and a pump (18) for discharging the cleaned water from the tank to at least one user, characterised in that the filter device (4) is reversibly pivotable out of a first position, in which the dirty water is cleaned by passing through a filter and discharged into the collecting tank (1), into a second position, in which the filter can be backwashed with cleaned dirty water from the collecting tank (1), the contaminated effluent produced by backwashing of the filter being drainable into a drainage system via an outlet (7, 12).

2. System according to claim 1, characterised in that the filter device (4) has a tubular housing (5) open on both sides, in which at least one in particular exchangeable filter is disposed, wherein pivoting of the filter device (4) is effected about a pivoting shaft (6) extending substantially perpendicular to the longitudinal axis of the tubular housing (5).

3. System according to claim 1, characterised in that the filter device (4') has a cup-shaped housing (5') whose base (31) is provided with an aperture (32) and in which at least one preferably exchangeable filter (33) is disposed, wherein pivoting of the filter device (4') is effected about a pivoting shaft (6') extending substantially perpendicular to the longitudinal axis of the cup-shaped housing (5').

4. System according to claim 3, characterised in that the filter (33) is formed as a substantially closed filter basket, the aperture (32) in the housing base (31) opening directly into the filter interior.

5. System according to claim 3 or 4, characterised by at least one nozzle (34), which is connected to the aperture (32) of the housing base (31) on the exterior and acts as an outlet from the filter device (4'), which nozzle can be brought into substantially fluid-tight and pressure-tight abutment with a backwash line (35) upon pivoting of the filter device (4') into the second position.

6. System according to one of claims 1 to 5, characterised by an actuating device (9), in particular in the form of a hydraulically or pneumatically actuatable jack for carrying out the pivoting motion of the filter device (4, 4') from the first into the second position.

7. System according to one of claims 2 to 6, characterised in that the pivoting shaft (6, 6') is disposed axially off-centre relative to the longitudinal axis of the housing (5, 5') in such a manner that, due to the force of gravity, the filter device (4, 4') pivots back automatically into the first position after the backwashing operation.

8. System according to claim 7, characterised in that the jack is a single-acting cylinder and the point of application of the jack rod (10) of the jack relative to the first position of the filter device (4, 4') and the direction of the force of gravity lies under the pivoting shaft (6, 6').

9. System according to one of claims 1 to 8, characterised by a respective or common stop (8) for the filter device (4, 4') in the first and second positions.

10. System according to one of claims 1 to 9, characterised by a limit switch (15), which is actuatable by the filter device (4, 4') upon pivoting into the second position and which triggers the start of backwashing.

11. System according to one of claims 1 to 10, characterised by a switch (36), in particular float-type switch, in the rim region of the cup-shaped housing (5') or in the region of the end of the tubular housing (5) through which the dirty water is introduced, the switch triggering pivoting of the filter device (4, 4') into the second position upon rising of the dirty water level in the housing (5, 5').

12. System according to one of claims 1 to 11, characterised by an overflow (37) in the rim region of the cup-shaped housing (5') or in the region of the end of the tubular housing (5) through which the dirty water is introduced, which overflow diverts surplus dirty water indirectly or directly into the drainage system upon rising of the dirty water level in the housing (5, 5').

13. System according to one of claims 1 to 12, characterised by a device for cleaning the collecting tank (1) and/or aerating the cleaned dirty water contained in the collecting tank (1), which device is disposed above the water level in the collecting tank (1) and has at least one rotary nozzle (21) of small cross-section, which sprays cleaned dirty water out of the collecting tank (1) under pressure against the inside wall of the collecting tank (1) and/or the water level.

14. System according to one of claims 1 to 13, characterised by a pump (18) with a pressure accumulator (19), which makes available the pressure necessary for discharging the cleaned dirty water to a user and for backwashing.

15. System according to claim 14, characterised in that the pressure for discharging the cleaned dirty water to a user and the pressure for backwashing is in the region of 1 to 4 bar.

16. System according to one of claims 1 to 15, characterised by a control device (13) by means of which the control of the pump (18), the actuating device (9) for the filter device (4, 4') and/or the cleaning or aerating device (21) is effected in a timed manner or as required via magnetic valves (14, 16, 23).

17. System according to one of claims 1 to 16, characterised by a device for treating the cleaned dirty water with UV-light for the bacteriological improvement of the water quality.

18. Method of cleaning a filter device of a water recycling system comprising a filter device for cleaning the dirty water supplied, a collecting tank for the dirty water cleaned after passing through a filter device, and a pump for discharging the cleaned dirty water from the tank to at least one user, comprising the following steps:
- pivoting of the filter device (4, 4') out of a first position, in which the dirty water is cleaned by passing through a filter and is passed into the collecting tank (1), into a second position;
- backwashing of the filter, in the direction opposite to that of filtering, with cleaned dirty water from the collecting tank (1);
- diversion of the effluent contaminated by backwashing of the filter into a drainage system (7, 12); and
- pivoting back of the filter device (4, 4') into the first position.

19. Use of the effluent recycling system according to one of claims 1 to 17 for cleaning dirty water, in particular from baths and showers, for re-use as clean water for lavatory flushing.

## Revendications

1. Installation de recyclage d'eaux usées avec un dispositif de filtration (4) pour purifier l'eau sale amenée, avec un réservoir collecteur (1) pour recueillir l'eau sale purifiée après être passée à travers le dispositif de filtration et avec une pompe (18) pour délivrer l'eau sale purifiée à partir du réservoir collecteur à au moins un utilisateur, installation de recyclage d'eaux usées caractérisée en ce que l'on peut faire pivoter de façon réversible le dispositif de filtration (4) à partir d'une première position, dans laquelle l'eau sale a été purifiée en passant à travers un filtre et a été amenée au réservoir collecteur (1), dans une deuxième position, dans laquelle le filtre peut être lavé à contre-courant par l'eau sale purifiée à partir du réservoir collecteur (1), l'eau usée, souillée par le lavage du filtre, pouvant être évacuée par un conduit de sortie (7, 12) dans un système d'évacuation.

2. Installation selon la revendication 1, caractérisée en ce que le dispositif de filtration (4) présente un carter (5) en forme de tube, ouvert des deux côtés, dans lequel est disposé au moins un filtre en particulier interchangeable, le pivotement du dispositif de filtration (4) ayant lieu autour d'un axe de pivotement (6) qui s'étend sensiblement perpendiculairement à l'axe longitudinal du carter en forme de tube (5).

3. Installation selon la revendication 1, caractérisée en ce que le dispositif de filtration (4') présente un carter en forme de cuvette (5'), dont le fond (31) est pourvu d'une ouverture (32) et dans lequel est disposé au moins un filtre de préférence interchangeable (33), le pivotement du dispositif de filtration (4') ayant lieu autour d'un axe de pivotement (6') qui s'étend sensiblement perpendiculairement à l'axe longitudinal du carter en forme de cuvette (5').

4. Installation selon la revendication 3, caractérisée en ce que le filtre (33) est constitué sous la forme d'un panier de filtration sensiblement fermé, l'ouverture (32) dans le fond du carter (31) débouchant directement dans la chambre intérieure du filtre.

5. Installation selon la revendication 3 ou 4, caractérisée par au moins un ajutage tubulaire (34), se raccordant vers l'extérieur à l'ouverture (32) du fond du carter (31), ajutage qui sert d'évacuation à partir du dispositif de filtration (4') et qui, lors du pivotement du dispositif de filtration (4') dans la seconde position, peut être mis en appui sur une conduite de lavage à contre-courant (35) de façon sensiblement étanche aux fluides et à la pression.

6. Installation selon l'une des revendications 1 à 5, caractérisée par un dispositif d'actionnement (9), en particulier ayant la forme d'un vérin de commande pouvant être actionné de façon hydraulique ou pneumatique, qui sert à effectuer le mouvement de pivotement du dispositif de filtration (4,4') de la première position à la deuxième position.

7. Installation selon l'une des revendications 2 à 6, caractérisée en ce que l'axe de pivotement (6, 6') ,est disposé de façon axialement excentrée, par rapport à l'axe longitudinal du carter (5,5'), et en ce qu'en raison de la force de la pesanteur le dispositif de filtration (4, 4') revient automatiquement par pivotement dans la première position après le processus de lavage à contre-courant.

8. Installation selon la revendication 7, caractérisée en ce que le vérin de commande est un vérin à simple effet et le point de venue en prise de la tige de commande (10) du vérin de commande se trouve, par rapport à la première position du dispositif de filtration (4, 4') et à la direction de la force de pesanteur, en-dessous de l'axe de pivotement (6, 6').

9. Installation selon l'une des revendications 1 à 8, caractérisée par une butée (8) pour le dispositif de filtration (4, 4') respectivement dans la première position et dans la seconde position ou commune aux deux positions.

10. Installation selon l'une des revendications 1 à 9, caractérisée par un commutateur de fin de course (15), qui peut être actionné par le dispositif de filtration (4, 4') lors du pivotement dans la seconde position et déclenche le début du processus de lavage à contre-courant.

11. Installation selon l'une des revendications 1 à 10, caractérisée par un commutateur (36), en particulier un commutateur flottant, dans la zone de collerette du carter en forme de cuvette (5') ou dans la zone de l'extrémité du carter (5) en forme de tuyau, à travers laquelle est introduite l'eau sale, le commutateur, lors de la montée du niveau de l'eau sale dans le carter (5, 5'), déclenchant un pivotement du dispositif de filtration (4, 4') dans la seconde position.

12. Installation selon l'une des revendications 1 à 11, caractérisée par un déversoir (37) dans la zone de collerette du carter en forme de cuvette (5') ou dans la zone de l'extrémité du carter en forme de tuyau (5), déversoir à travers lequel est introduite l'eau sale qui, lors de la montée du niveau de l'eau sale dans le carter (5, 5'), envoie l'eau sale en excès directement ou indirectement dans le système d'évacuation.

13. Installation selon l'une des revendications 1 à 12, caractérisée par un dispositif de nettoyage du réservoir collecteur (1) et/ou d'aération de l'eau sale purifiée contenue dans le réservoir collecteur (1), dispositif qui est disposé au-dessus du niveau de l'eau dans le réservoir collecteur (1) et présente au moins une buse tournante (21) de faible section transversale, qui pulvérise sous pression l'eau sale purifiée à partir du réservoir collecteur (1) contre la paroi intérieure de celui-ci et/ou le niveau de l'eau.

14. Installation selon l'une des revendications 1 à 13, caractérisée par une pompe (18) avec un réservoir d'accumulation sous pression (19), qui met à disposition la pression nécessaire pour la délivrance de l'eau sale purifiée à un utilisateur comme aussi la pression nécessaire pour le lavage à contre-courant.

15. Installation selon la revendication 14, caractérisée en ce que la pression servant à délivrer l'eau sale purifiée à un utilisateur et la pression pour le lavage à contre-courant se trouvent dans la zone comprise entre 1 et 4 bars.

16. Installation selon l'une des revendications 1 à 15, caractérisée par un dispositif de commande (13), au moyen duquel la commande de la pompe (18), du dispositif d'actionnement (9) pour le dispositif de filtration (4, 4') et/ou le dispositif de nettoyage ou d'aération (21) a lieu au moyen d'électro-vannes (14, 16, 23) commandées en fonction des besoins et/ou du temps.

17. Installation selon l'une des revendications 1 à 16, caractérisée par un dispositif de traitement de l'eau sale purifiée avec des rayons UV pour améliorer la qualité bactériologique de l'eau.

18. Procédé de nettoyage d'un dispositif de filtration d'une installation de recyclage d'eaux usées avec un dispositif de filtration servant à purifier l'eau sale amenée, avec un réservoir collecteur pour l'eau sale purifiée après son passage dans le dispositif de filtration et une pompe servant à délivrer l'eau sale purifiée à partir du réservoir à au moins un utilisateur, procédé comportant les séquences suivantes :
- pivotement du dispositif de filtration (4, 4') à partir d'une première position, dans laquelle l'eau sale est purifiée en passant à travers le filtre et est délivrée au réservoir collecteur (1), dans une deuxième position ;
- lavage à contre-courant du filtre en sens contraire du sens de filtration avec de l'eau sale purifiée provenant du réservoir collecteur (1);
- envoi de l'eau usée souillée par le lavage à contre-courant du filtre dans un système d'évacuation (7, 12) et
- retour par pivotement du dispositif de filtration (4, 4') dans la première position.

19. Utilisation de l'installation de recyclage d'eaux usées selon l'une des revendications 1 à 17 pour la purification d'eau sale provenant notamment de bains et douches en vue de sa réutilisation pour chasse d'eau de W.C.
